Europäisches Patentamt

(19) European Patent Office

Office européen des brevets

(11) Numéro de publication: **0 020 269**
**B1**

## (12) FASCICULE DE BREVET EUROPEEN

(45) Date de publication du fascicule du brevet:
02.10.85

(21) Numéro de dépôt: 80400760.7

(22) Date de dépôt: **29.05.80**

(51) Int. Cl.⁴: **G 01 C 21/20,** G 01 S 13/93

(54) **Dispositif de détection et de prévention de risques de collisions dans la navigation en haute mer et côtière.**

(30) Priorité: 31.05.79 FR 7914036

(43) Date de publication de la demande:
**10.12.80 Bulletin 80/25**

(45) Mention de la délivrance du brevet:
**02.10.85 Bulletin 85/40**

(84) Etats contractants désignés:
**AT BE CH DE GB IT LI LU NL SE**

(56) Documents cités:
**DE - B - 1 187 140**
**GB - A - 1 365 508**
**GB - A - 2 020 938**
**US - A - 2 717 448**
**NACHRICHTENTECHNIK, vol. 17, no. 8, août 1967 Berlin,**
**DD H. SCHINDLER et al. "Verfahrens- und**
**Gerätetechnische Probleme der Teilautomatischen**
**Radarauswertung für den Kollisionsschutz auf See",**
**pages 294-300**
**LUFTFAHRTTECHNIK-RAUMFAHRTTECHNIK, vol. 9, no.**
**2, février 1963, Düsseldorf, DE H. MATUSCHE:**
**"Kollarm" Ein neues Kollisionswarngerät", pages 54-63**
**Schiff und Hafen, Vol. 7 (1974) pages 654, 655**
**Le dossier contient des informations techniques**
**présentées postérieurement au dépôt de la demande et**
**ne figurant pas dans le présent fascicule.**

(73) Titulaire: **Lefevre, Xavier, 8, rue Saint Marc,**
**F-75002 Paris (FR)**

(72) Inventeur: **Degre, Thomas, 32-36 rue du Borrego,**
**F-75020 Paris (FR)**
Inventeur: **Lefevre, François, 14 allée des Chèvrefeuilles,**
**F-1400 Caen (FR)**
Inventeur: **Lefevre, Xavier, 8, rue Saint Marc,**
**F-75002 Paris (FR)**

(74) Mandataire: **Lavoix, Jean et al, c/o Cabinet**
**Lavoix 2, Place D'Estienne D'Orves, F-75441 Paris**
**Cedex 09 (FR)**

## Description

La présente invention concerne les dispositifs d'aide à la navigation et se rapporte plus particulièrement à la détection et à la prévention de risques de collision dans la navigation en haute mer et côtière.

L'introduction à bord des navires de toutes catégories de radars a permis aux navigateurs d'apprécier les risques de collision avec les obstacles qui les entourent.

Par ailleurs, il s'est créé récemment dans de nombreux pays des stations de surveillance du trafic maritime. Entre autres missions, ces stations équipées de radars, veillent à prévenir les risques de collision entre les navires.

Si l'on effectue sur l'écran radar d'un navire porteur A le pointage des échos successifs correspondants à une même cible B, mobile ou fixe, on peut connaître la vitesse relative $V_R$ de cette cible et ainsi apprécier:

— la distance de passage au plus près, désignée communément dans le language maritime par l'abréviation DCPA,
— le temps de passage au plus près TCA,
— la position du navire porteur A et celle de la cible B lors du passage au plus près.

Depuis quelques années, des sytèmes anticollision basés sur des calculatrices permettent d'effectuer un pointage automatique des cibles qui entourent le navire porteur et de fournir des aides à la navigation pour prévenir les abordages.

Le principe de ces systèmes consiste à calculer la vitesse et le cap des cibles qui sont à portée radar, d'en déduire par le calcul les valeurs de DCPA et de TCA et de lancer des alertes au navigateur si ces valeurs deviennent inférieures à des seuils de sécurité prédéterminée. Certains systèmes les plus évolués peuvent donner des indications sur le changement de cap à effectuer par le navire pour éviter un obstacle menaçant et dans certains cas, des indications sur l'effet d'une modification de la vitesse.

Cependant, ces systèmes mettent en oeuvre d'importants calculs et ne présentent pas simultanément une vue globale des possibilités de manoeuvre en cap et en vitesse du navire porteur.

Dans un article de la revue »Schiff und Hafen«, volume 7/1974, pages 654 et 655, on décrit la théorie d'une méthode entièrement graphique de détection et de prévention de risques de collisions qui permet au navigateur de se rendre compte rapidement et visuellement pour chacun des obstacles fixes ou mobiles qui l'entourent:

— du risque de collision avec cet obstacle;
— de la valeur de la distance de passage au plus près DCPA;
— du temps de passage au plus près TCA;
— de la position de son navire et de celle de l'obstacle lors du passage au plus près;

— des manoeuvres en cap et en vitesse qu'il peut faire pour passer à une distance de sécurité de l'obstacle qu'il se fixe à l'avance sans pour autant risquer une collision avec un autre obstacle;
— de l'effet de la manoeuvre qu'il aura décidé de faire.

L'article précité décrit donc la théorie d'un appareil de détection et de prévention de risques de collision entre un premier navire et au moins un second navire et/ou obstacle, qui, à partir d'informations de cap et de vitesse relevées par le système électronique de pointage automatique des échos radar équipant le premier navire permet d'afficher un secteur dangereux représentatif des valeurs dangereuses de cap et de vitesse pour ledit premier navire par rapport à l'autre navire et/ou obstacle pouvant se présenter, ce secteur dangereux étant destiné à être visualisé sur des moyens de visualisation au moyen de deux segments de droite se coupant en un point commun et obtenues par les intersections respectives de deux demi-droites issues dudit point commun et dénommées respectivement »demi-droite de passage sur l'avant« et »demi-droite de passage sur l'arrière« avec un cercle centré sur la position du premier navire et dont le rayon est égal au vecteur vitesse maximale de ce premier navire, ces deux demi-droites étant déterminées à partir d'une demi-droite issue point commun et dite »demi-droite de collision« résultant de la translation sur une distance égale au vecteur vitesse actuelle du second navire et/ou obstacle, de la distance actuelle séparant les positions du premier navire et du second navire et/ou obstacle à l'instant considéré, la »demi-droite de passage sur l'avant« faisant avec ladite »demi-droite de collision« un angle dont le sinus est égal au quotient de la distance de sécurité »de passage sur l'avant« choisie et de ladite distance actuelle, la »demi-droite de passage sur l'arrière« faisant un angle avec la »demi-droite de collision« dont le sinus est égal au quotient de la distance de sécurité »de passage sur l'arrière« choisie et de ladite distance actuelle, la »demi-droite de collision« étant située entre les »demi-droites de passage sur l'avant et sur l'arrière«.

La présente invention a pour but de fournir un appareil permettant de mettre en oeuvre la méthode théorique décrite dans l'article de revue précité.

Elle a donc pour objet un tel appareil qui est caractérisé en ce qu'il comprend un clavier alphanumérique destiné d'une part à sélectionner parmi lesdits autres navires et/ou obstacles lequel doit être pris en compte pour l'établissement dudit secteur dangereux représentatif et d'autre part, à introduire les vitesses et les coordonnées de la position dudit premier navire, des moyens électroniques de traitement pour synthétiser à partir des informations provenant dudit système électronique de pointage automatique des échos radar et dudit clavier des ensembles de données définissant le secteur dangereux ou les secteurs dangereux associé(s) à un ou plusieurs navires et/ou obstacles sélectionnés et le vecteur vitesse actuelle par rapport à ce ou à ces secteur(s) dangereux, lesdits moyens électroniques de traitement des données comprenant un premier multiplexeur dont les entrées sont connectées audit système électronique de pointage automatique des échos radar par l'intermédiaire de registres de stockage des informations fournies par ledit système électronique de pointage automatique des échos radar, un second multiplexeur associé au clavier alphanumérique par l'intermédiaire de registres de stockage des données introduites par ledit clavier, un circuit de sélection de cibles connecté aux premier et second multiplexeurs et commandant un ensemble de circuits de calcul des coordonnées des points se rapportant à la cible sélectionnée, ledit ensemble de circuits de calcul étant en outre connecté directement à un troisième multiplexeur destiné à multiplexer les coordonnées desdits points se rapportant à ladite cible sélectionnée; lesdits moyens électroniques de traitement de détermination des segments à visualiser, connecté au troisième multiplexeur et au premier multiplexeur et au premier multiplexeur et commandant un générateur de vecteurs dont la sortie est connectée à un tube cathodique desdits moyens de visualisation.

Dans un autre article tiré de la revue »Nachrichtentechnik«, volume 17, n° 18, 1967, pages 294 à 300, on décrit une construction de détermination des risques de collision (Fig. 13) qui permet au navigateur situé sur un navire A de déterminer les manoeuvres pour éviter un navire B, en se rapportant à la dernière position connue du navire B.

Pour un autre navire C, la construction du secteur interdit correspondant, serait à son tour rapportée à la dernière position connue du navire B.

D'une façon plus générale, pour un nombre N de navires, on aboutirait, selon ce procédé, à un nombre N de secteurs interdits rapportés aux dernières positions connues de ces N navires et donc susceptibles d'être très dispersés sur l'écran radar ou sur la feuille de construction séparée.

Le navigateur sur le niveau A, après avoir effectué à la règle plate, tous les tracés nécessaires à l'obtention des N secteurs inderdits devra ensuite vérifier sur des images dispersées, que la manoeuvre qu'il a l'intention de faire porte l'extrémité de son vecteur vitesse en dehors de chacun des N secteurs interdit.

La dispersion de ces secteurs peut rendre l'interprétation de la situation longue et délicate et peut même conduire à des erreurs.

Grâce à l'appareil suivant l'invention, on peut centrer autour du navire porteur les constructions géométriques issues du triangle des vitesses correspondant à chaque navire de son entourage à l'instant donné.

Enfin, GB-A-1 365 508 décrit un procédé qui repose sur l'examen de l'intersection de la ligne de foi du navire porteur avec les zones de danger potentiel (predicted area of danger PAD) correspondant aux navires qui l'entourent, déterminées entre autres en fonction de la vitesse réelle ou simulée du navire porteur. Ce procédé est mis en oeuvre au moyen d'un appareil comprenant un système électronique de pointage automatique des échos radar, un clavier destiné d'une part à sélectionner parmi les autres navires et/ou obstacle, lequel d'entre eux doit être pris en compte pour l'établissement de l'information utile, et d'autre part à introduire les vitesses et les coordonnées de la position du navire porteur, des moyens électroniques de traitement comprenant notamment des registres de stockage de données pour synthétiser à partir des informations provenant du radar et du clavier, une indication des objets à surveiller et des moyens de visualisation de l'information utile qui utilisent un générateur de vecteurs et un tube cathodique. Des ensembles de données définissent la forme de l'information utile, (c'est-à-dire les zones de danger potentiel) associée à un ou plusieurs navires et/ou obstacles sélectionnés. Cet appareil permet au navigateur de connaître d'un coup d'oeil l'ensemble de ses possibilités de changement de cap, vitesse actuelle conservée. Mais, s'il veut connaitre l'effet d'une modification de vitesse ou d'une action combinée sur le cap ou la vitesse, il devra recourir à une simulation.

L'appareil suivant l'invention tel que défini ci-dessus permet au navigateur de se rendre compte d'un seul coup d'oeil de l'ensemble de ses possibilités de manoeuvres (changement de cap, vitesse actuelle conservée; modification de vitesse, cap actuel conservé; action combinée sur le cap et la vitesse).

Les modes particuliers de réalisation de l'invention sont définis aux revendications 2 et 3.

Aux dessins annexés, donnés uniquement à titre d'exemple:

— la Fig. 1 est un schéma montrant la construction géométrique des grandeurs nécessaires à l'évaluation des risques de collisions entre deux navires;
— la Fig. 2 montre une construction géométrique permettant l'appréciation de l'évolution de la situation relative d'un premier navire sur lequel l'appareil est utilisé et d'un second navire;
— la Fig. 3 montre l'application de la construction géométrique de la Fig. 2 à plusieurs obstacles mobiles ou fixes avec lesquels un navire risque d'entrer en collision;
— la Fig. 4 est une vue schématique d'un appareil électronique de détection et de prévention des risques de collision suivant l'invention;
— les Fig. 5A et 5B forment ensemble le schéma synoptique de l'appareil de la Fig. 4;
— la Fig. 6 représente plus en détail une partie des schémas des Fig. 5A et 5B;

— la Fig. 7 est une vue partielle de l'écran de visualisation de l'appareil de la Fig. 4, montrant les informations relatives à la situation du navire porteur par rapport aux obstacles à un instant donné.

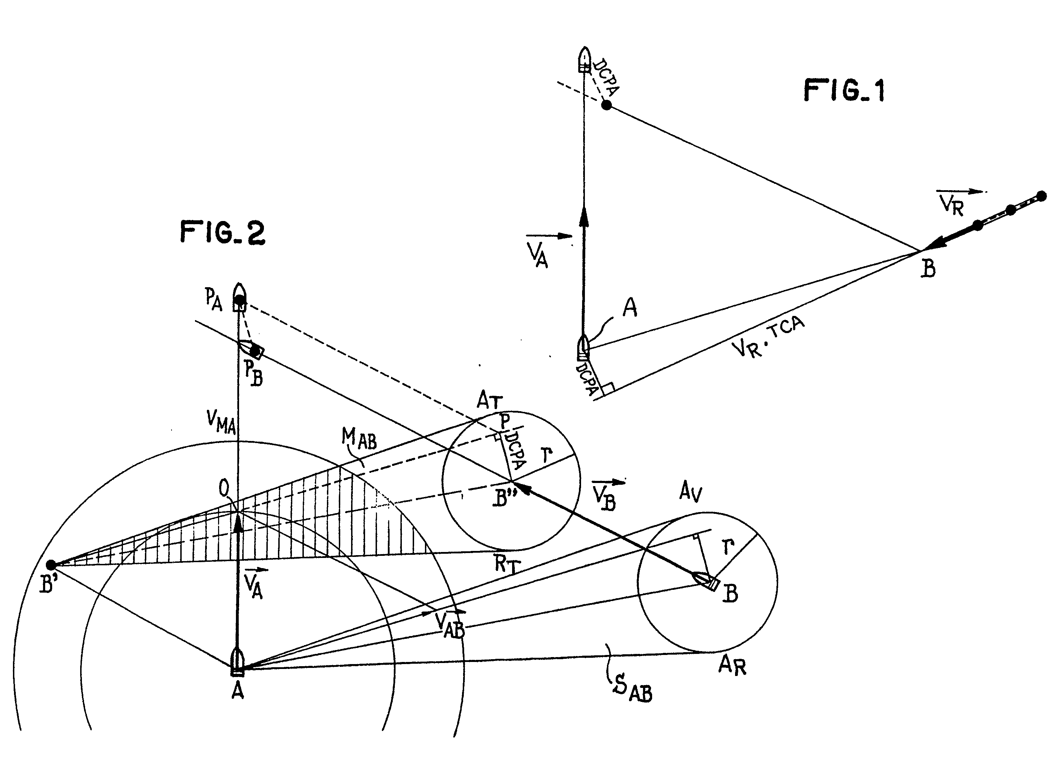

On suppose en se reportant au schéma de la Fig. 1 que les points A et B portés sur celle-ci représentent respectivement un navire porteur et une cible constituée elle aussi par un navire dont le personnel naviguant du navire porteur doit déterminer les paramètres en vue d'apprécier la situation relative des deux navires et l'évolution de cette situation. Sur la ligne de foi du navire A, on a porté la vitesse de celui-ci sous la forme du vecteur $\vec{V_A}$.

On a en outre joint le point B au point A, et on a tracé la ligne de foi du navire B qui coupe la ligne de foi du navire A.

A proximité de l'intersection des lignes de foi des navires A et B, on a déterminé la position de ces navires lorsqu'ils se trouvent à la distance de passage au plus près DCPA et on a tracé la DCPA en pointillés.

On a ensuite tracé la DCPA à partir du point A et on a abaissé une perpendiculaire sur ce segment à partir du point B en obtenant ainsi la direction de la vitesse relative $\vec{V_R}$.

Le triangle rectangle ainsi formé a pour côtés, la distance AB, la DCPA et le produit $V_R \cdot TCA$.

Par conséquent, connaissant la vitesse relative du navire B par rapport au navire A, qui est donnée par le radar de bord de ce dernier, on peut aisément en déduire le temps de passage au plus près.

Cependant, les indications données par la construction de la Fig. 1 et qui sont faciles à obtenir à bord de tout navire équipé des moyens d'aide à la navigation utilisés jusqu'ici, sont loin de suffire pour donner au navigateur des indications précises quant aux manoeuvres qu'il doit entreprendre pour éviter de se trouver au bout d'un certain temps dans une situation délicate tout en modifiant le moins possible la route qu'il doit suivre.

La construction représentée à la Fig. 2 permet de résoudre ce problème.

A cet effet, on utilise la notion de »secteur dangereux de cap et de vitesse« pour le navire porteur par rapport à un obstacle, qui sera défini ci-après.

On suppose connaitre la vitesse et le cap du navire porteur A, soit le vecteur $\vec{V_A}$, la vitesse et le cap de l'obstacle B soit le vecteur $\vec{V_B}$ (nul si l'obstacle B est fixe) et la distance A—B qui les séparé à un instant donné pris comme origine des temps. La façon dont sont connus ces éléments sera décrite plus loin.

Soit r la distance minimale de passage au plus près que le navigateur du navire porteur A tient à préserver vis à vis de l'obstacle B. Cette distance est matérialisée par un cercle de sécurité de rayon r ayant B pour centre.

Soit $\vec{V_{AB}}$ la vitesse relative du navire porteur A par rapport à l'obstacle B obtenue par différence vectorielle:

$$\vec{V_{AB}} = \vec{V_A} - \vec{V_B}$$

Soient $AA_V$ et $AA_R$, les segments tangents au cercle de rayon r centré sur l'obstacle B. On notera $S_{AB}$, le secteur délimté par les segments $AA_V$ et $AA_R$ et dont la bissectrice est le segment AB.

Lobstacle B passera à une distance de passage au plus près DCPA du navire porteur A inférieure à r si et seulement si le vecteur $\vec{V_{AB}}$ appartient au secteur $S_{AB}$.

De plus:

— Si $\vec{V_{AB}}$ est comprise entre $AA_V$ et AB, l'obstacle 8 passerta derrière le navire porteur A;
— Si $\vec{V_{AB}}$ est confondue avec AB, l'obstacle B est en route de collision avec le navire porteur A;
— Si $\vec{V_{AB}}$ est comprise entre AB et $AA_R$, l'obstacle B passera devant le navire porteur A.

Le secteur dangereux de cap et de vitesse du navire A par rapport à l'obstacle B noté plus loin par $M_{AB}$, qui constitue la base théorique de l'invention s'obtient par une translation vectorielle $\vec{V_B}$ du secteur $S_{AB}$.

Soient B' et B'', les points transformés des points A et B respectivement par la translation $\vec{V_B}$.

Le vecteur joignant B' et l'extrémité O du vecteur $V_A$ est égal au vecteur vitesse relative $\vec{V_{AB}}$.

Soient $B'A_T$ et $B'R_T$ les segments transformés respectifs des segments $AA_V$ et $AA_R$ par la translation $\vec{V_B}$.

Soit P le point obtenu en abaissant du point B'' la perpendiculaire à la direction B'O.

B''P représente la valeur de la DCPA.

Compte tenu de la construction représentée à la Fig. 1 la valeur de TCA s'obtient en établissant le rapport du segment B'P au segment B'O.

La position $P_A$ du navire porteur et la position $P_B$ de l'obstacle B lors du passage au plus près s'obtiennent en déplaçant le segment B'P parallèlement à lui-même en suivant la direction de $V_B$ jusqu'à couper la route du navire porteur A.

Cette transformation simple du secteur $S_{AB}$ permet au navigateur du navire porteur A d'interpréter la situation en raisonnant, non plus sur sa vitesse relative par rapport à l'obstacle B, mais directement à partir du vecteur vitesse de son propre navire de la façon qui va être décrite.

En supposant que le vecteur vitesse de l'obstacle B ne varie pas, le navigateur examinant un graphique conforme à celui représenté sur la Fig. 2, peut tirer rapidement les conclusions suivantes:

— si le point O, extrémité du vecteur vitesse, $\vec{V_A}$ du navire porteur est extérieur au secteur $M_{AB}$, il est assuré que le navire A passera à une distance de passage au plus près de l'obstacle B supérieure à r;
— si le point O est à l'intérieur du demi-secteur $B''B'A_T$, le navire passera devant l'obstacle B avec une DCPA inférieure à r;
— si le point O est sur le segment B'B", le navigateur voit qu'il est en route de collision avec l'obstacle B;
— si le point 0 est à l'intérieur du demisecteur B"B'R$_T$, le navire A passera derrière l'obstacle B avec une DCPA inférieure à r.

Ainsi, par simple examen du point O et du secteur M$_{AB}$, le navigateur du navire porteur A peut s'apercevoir d'un risque de collision avec l'obstacle B, connaitre les valeurs de DCPA et TCA et, par ailleurs, la position P$_A$ de son navire et la position P$_B$ de lobstacle B lors du passage au plus près.

Il reste donc à déterminer la manoeuvre d'évitement que doit exécuter le navire porteur A afin de passer à une distance de passage au plus près de l'obstacle B supérieure à la valeur du seuil de sécurité r.

D'une façon générale, la manoeuvre d'un navire se caractérise:

— soit par un changement de cap à droite ou à gauche pouvant aller jusqu'à un demi-tour, en conservant sa vitesse;
— soit par une augmentation ou par une réduction de sa vitesse pouvant aller jusqu'à l'arrêt, sans changement de cap;
— soit par une action combinée sur le cap et sur la vitesse.

Soit V$_{MA}$, la vitesse maximale que puisse atteindre le navire porteur A.

La surface du disque, au sens mathématique du terme, centré sur le navire porteur A et de rayon du terme, centré sur le navire porteur A et de rayon V$_{MA}$ représente le lieu géométrique de l'extrémité du vecteur vitesse du navire porteur A s'il faisait varier son cap dans toutes les directions possibles et s'il modifiait sa vitesse de toutes les valeurs possibles.

Ce disque représente la »PLAGE DE MANOEUVRE« du navire porteur A.

On suppose que le navigateur du navire porteur A se soit aperçu d'un risque de collision avec l'obstacle B en faisant la construction de la Fig. 2. Dans ce cas de figure, c'est au navire porteur A de manoeuvrer, l'obstacle B devant conserver cap et vitesse.

Le navigateur peut choisir toute solution de changement de cap et/ou de modification de vitesse qui portent l'extrémité de son modification de vitesse qui portent l'extrémité de son nouveau vecteur vitesse en dehors du secteur M$_{AB}$ et qui reste à l'intérieur de sa plage de manoeuvre.

Il est alors assuré de passer devant ou derrière l'obstacle B avec une distance de passage au plus près supérieure au seuil de sécurité r qu'il s'est fixé.

L'invention, à partir de la notion »SECTEUR DANGEREUX DE CAP ET DE VITESSE« M$_{AB}$, permet au navigateur du navire porteur A de se rendre compte clairement et rapidement d'un risque de collision avec un obstacle B, et lui fournit clairement et rapidement l'ensemble des manoeuvres qui lui permettent de passer à une distance de passage au plus près de l'obstacle B superieure à la valeur du seuil r.

C'est au navigateur de choisir la solution en fonction des réglements internationaux qui fixent la priorité des navires en cas de risques de collision et donnent des règles de manoeuvre.

En outre, le navigateur peut choisir le seuil de sécurité qui lui convient en fonction de la situation et même choisir des seuils différents selon que l'obstacle B lui passe devant ou derrière.

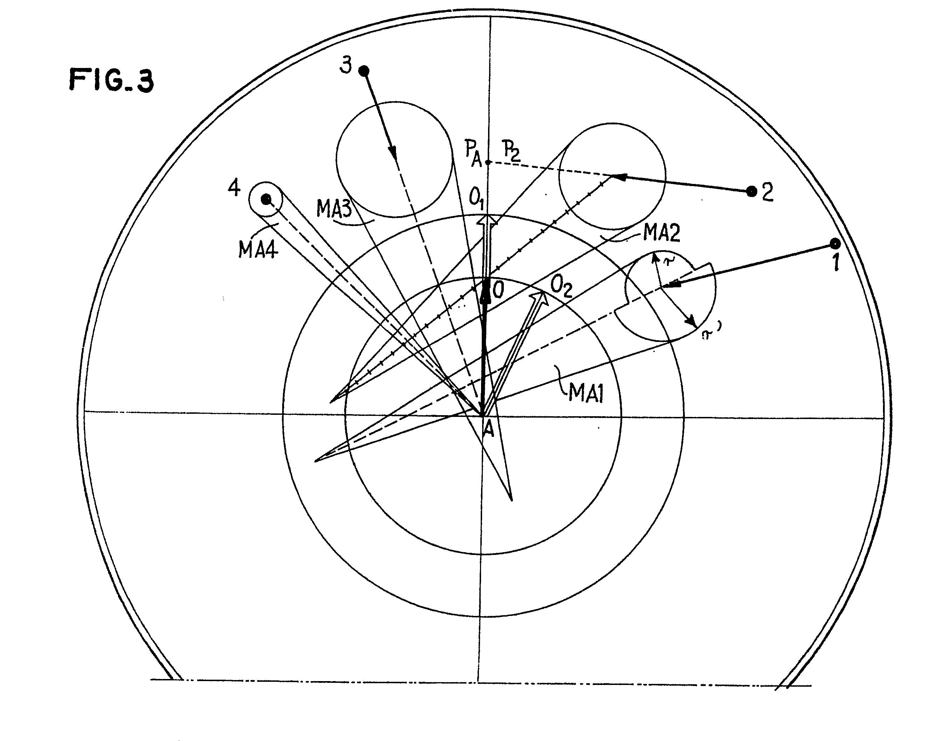

La description qui va suivre donnée à titre d'exemple non limitatif en se référant à la Fig. 3, fera bien comprendre comment l'appareil selon l'invention peut s'appliquer au cas d'un navire porteur entouré de plusieurs obstacles fixes ou mobiles.

Le navire porteur A est entouré de quatre obstacles. Les obstacles 1, 2 et 3 sont mobiles, l'obstacle 4 est fixe.

On suppose qu'il soit nécessaire de préserver une DCPA de sécurité de 0,5 mille vis à vis des obstacles 2 et 3, une DCPA de sécurité de 0,1 mille vis à vis de l'obstacle 4 et pour l'obstacle 1, une DCPA de sécurité de 0,3 mille si le navire A passe devant l'obstacle et une DCPA de sécurité de 0,5 mille s'il passe derrière l'obstacle.

Le navire porteur A se déplace à 12 noeuds et on considère une extrapolation des positions pour les 6 minutes à venir; ainsi, la longueur AO représente la distance que va parcourir le navire porteur A dans les 6 minutes, soit 1,2 mille.

Il est évident que l'utilisation de l'appareil, selon l'invention peut laisser au navigateur le choix des échelles d'espace et de temps.

Le navigateur du navire porteur A examine les secteur du navire porteur A examine les secteurs dangereux de cap et de vitesse relatifs à chacun des obstacles 1 à 4 de la manière indiquée en référence à la Fig. 2 et constate alors:

— qu'il fait acetuellement une route de collision avec l'obstacle 2, car l'extrémité de son vecteur vitesse se trouve sur la bissectrice du secteur MA$_2$. En l'absence de réaction, la collision se produirait au point P$_A$ à 2,4 milles devant lui dans 12 minutes;
— qu'il n'est actuellement pas en risque de collision avec les trois autres obstacles.

On suppose que le navigateur veuille parer dès maintenant le danger vis à vis de l'obstacle 2 sans pour autant créer un risque de collision avec l'un des trois autres obstacles.

Il doit choisir un changement de cap et/ou une modification de vitesse qui amène le point O en dehors des quatre secteurs dangereux de cap et de vitesse liés aux quatre obstacles.

Il peut par exemple choisir d'accélérer jusqu'à 19 noeuds en conservant son cap actuel (point O$_1$) ou il peut virer de 25 degrés à droite en conservant sa vitesse actuelle (point O$_2$).

Dans ce cas de figure, une réduction de vitesse en conservant son cap actuel serait dangereuse, car pour éviter l'obstacle 2, il se retrouverait en risque de collision avec l'obstacle 3 et éventuellement avec l'obstacle 1.

On va maintenant décrire un appareil numérique de visualisation du secteur dangereux de cap et de vitesse de chaque obstacle entourent le navire porteur et qui permet au navigateur d'avoir une vision globale des risques qu'il encourt et de l'ensemble des manoeuvres sur le cap et/ou sur la vitesse qui lui permettent d'éviter ces risques de collision et d'éviter d'en créer de nouveaux, en passant à une distance de passage au plus près de chaque obstacle supérieure aux seuils de sécurité qu'il s'est fixé pour chacun d'eux.

L'appareil numérique peut être installé sur la passerelle du navire porteur.

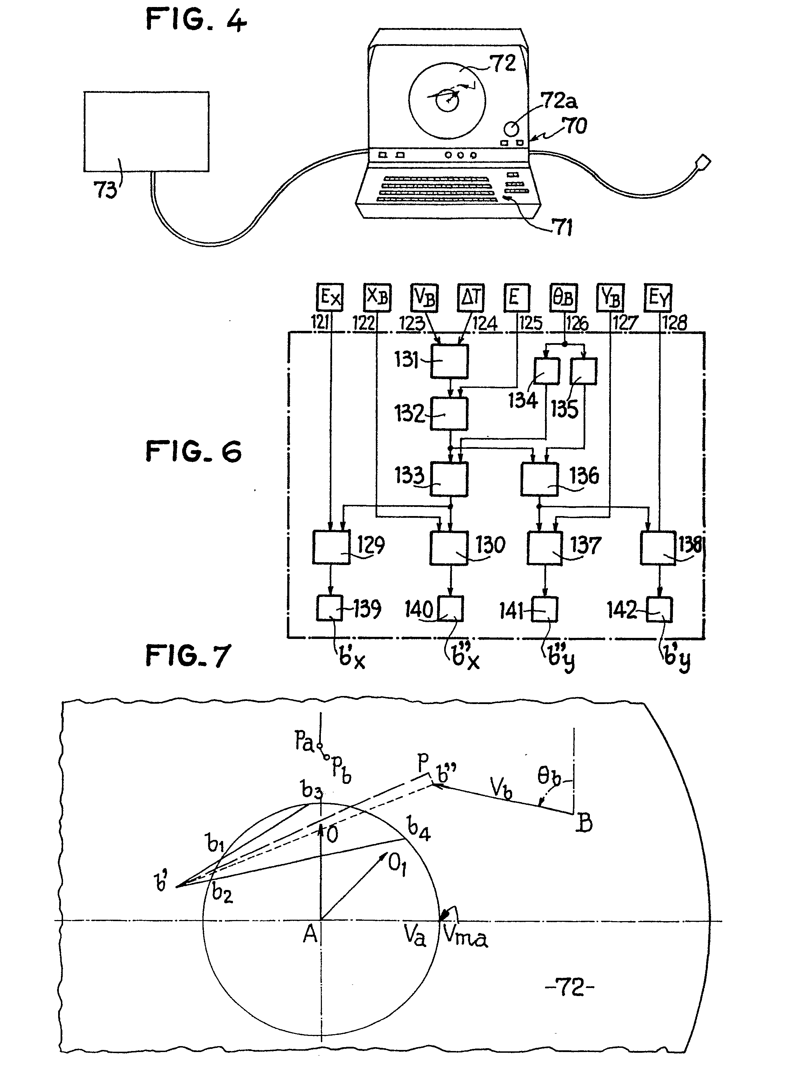

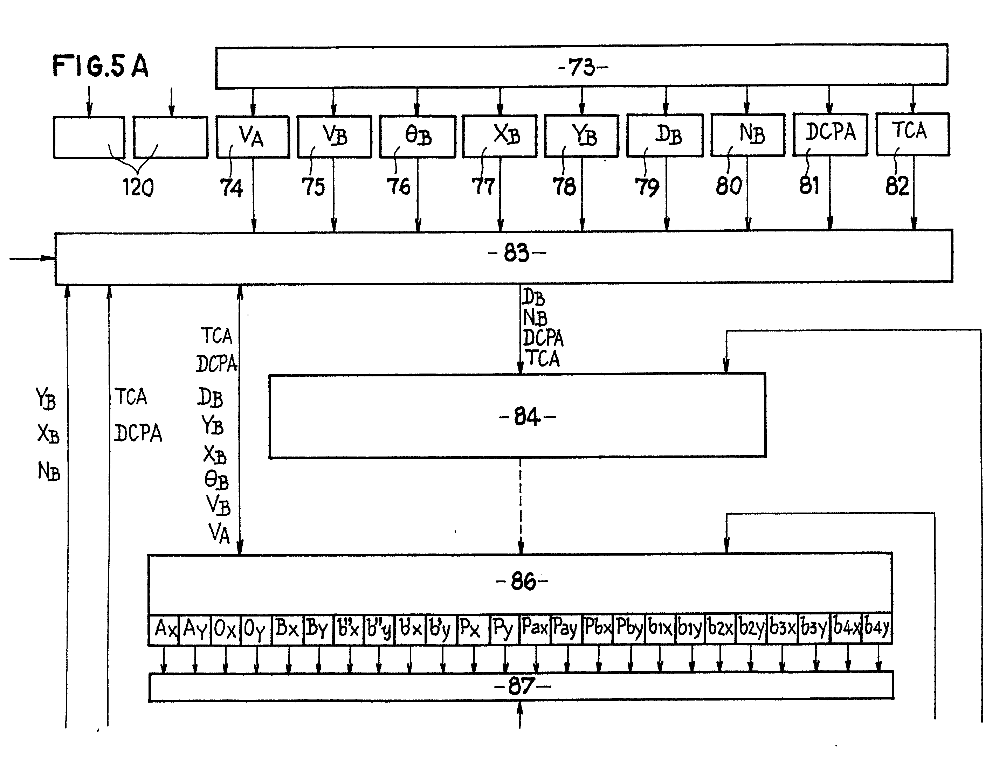

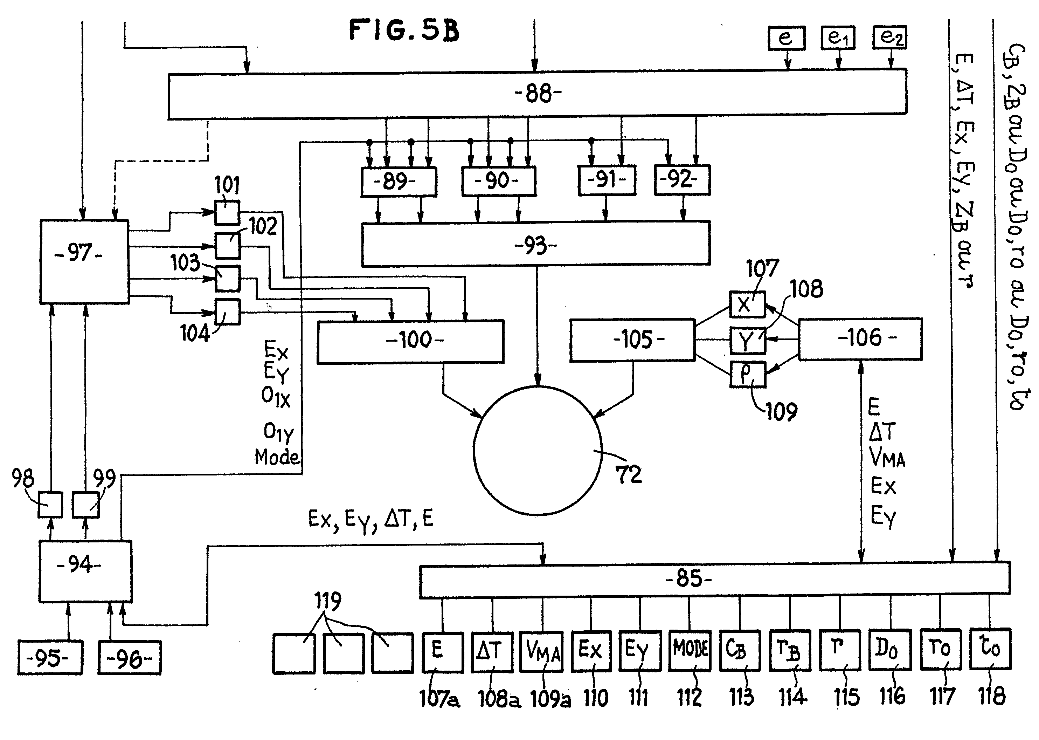

Ainsi que le montre la Fig. 4, il comprend un pupitre 70 équipé d'un clavier alphanumérique 71, d'un écran de visualisation 72 et d'un dispositif 72a constitué par une boule et destiné à commander les déplacements d'un marquer sur l'écran 72. Le pupitre contient en outre un ensemble de circuits de mémorisation et de calcul dont le schéma est représenté aux Fig. 5A et 5B.

Le pupitre 70 est connecté à un système 73 électronique de pointage automatique des échos radar dont on suppose que le navire porteur est muni.

Le circuit représenté aux Fig. 5A et 5B comporte le système 73 dont les sorties délivrent une information vitesse $V_A$ du navire porteur A et les informations suivantes pour une cible B donnée.

— Vitesse $V_B$ de la cible B,
— cap $\theta_B$ de la cible B,
— Coordonnées cartésiennes $X_B$ et $Y_B$ de la cible B,
— Distance $D_B$ séparant le navire porteur A de la cible B,
— Code d'identification $N_B$ de la cible B,
— Distance de passage au plus près DCPA séparant le navire porteur A de la cible B,
— Temps TCA au bout duquel la DCPA est atteinte.

Chacune de ces sorties est connectée à un registre à décalage 74 à 82 de stockage des données correspondantes.

Les sorties des registres 74 à 82 sont connectées à des entrées correspondantes d'un multiplexeur d'entrée 83 dont les sorties matérialisées sur la Fig. 5A par un seul conducteur sont connectées à des entrées correspondantes d'un circuit 84 de sélection de cibles qui en reçoit les données provenant des registres 79 à 82.

Le circuit de sélection est en outre connecté à un multiplexeur 85 associé au clavier 71 (Fig. 5B).

La sortie du circuit de sélection 84 est connectée à une entrée d'un ensemble 86 de circuits de calcul de coordonnées des points qui constituent les extrémités des segments de droite utilisés pour établir les secteurs dangereux de cap et de vitesse.

L'ensemble 86 est en outre connecté directement au multiplexeur d'entrées 83 et au multiplixeur de clavier 85.

Les sorties de l'ensembles 86 sont reliées aux entrées correspondantes d'un multiplexeur de points ou intermédiaire 87 connecté à un ensemble de circuits 88 de détermination des segments à visualiser avec leur mode continu ou tireté (Fig. 5B), cet ensemble étant également connecté au multiplexeur d'entrées 83.

Les sorties de l'ensemble 88 de détermination des segments à visualiser sont connectées par l'intermédiaire de registres 89 à 92 à un genérateur 93 de vecteurs en mode continu ou tireté.

Les registres 89 à 92 comportent des entrées supplémentaires connectées à un ensemble de circuits de manoeuvre 94 associé à la boule 72a (Fig. 4).

L'ensemble 94 est connecté à deux registres 95 et 96 de stockage de coordonnées traduisant les déplacements de la boule 72a.

Il commande un circuit d'affichage alphanumérique 97 auquel il est connecté par l'intermédiaire de registres 98 et 99. Le circuit d'affichage 97 est connecté à un générateur de caractères 100 par l'intermédiaire de circuits 101 à 104. Le circuit 97 est en outre connecté au multiplexeur d'entrées 83.

Le générateur de caractères 100 est destiné à commander l'affichage de caractères sur le tube cathodique 72 qui est en outre connecté au générateur de vecteurs 93 ainsi qu'à un générateur de cercles 105 commandé par un circuit de calcul 106 par l'intermédiaire de circuits 107 à 109.

Le circuit 106 est connecté au multiplexeur de clavier 85.

A ce dernier sont associés des registres 107a, 109a et 110 à 118 de stockage des informations frappées sur le clavier.

A ces derniers registres comme aux registres 74 à 82 de stockage des information d'entrée, sont respectivement ajoutés des registres 119 à 120 destinés à être utilisés lors de l'extension de l'emploi de l'appareil à une station à terre.

L'ensemble 86 de circuits de calcul des coordonnées va maintenant être décrit plus en détail sous forme d'un circuit de calcul des coordonnées des points b' et b'' qui sont les extrémités du segment définissant sur l'écran de la Fig. 7 la distance entre le navire porteur A à une cible B. Ainsi qu'on peut le voir à la Fig. 6, il comprend des registres 121 à 128 de stockage des informations relatives au point B, à la vitesse de la cible B, au cap de la cible, et à partir desquels les coordonnées des points b' et b'' peuvent être calculées.

Le registre 121 est connecté à une première entrée d'un additionneur 129.

Le registre 122 est connecté à une première entrée d'un additionneur 130.

Les registres 123 et 124 sont respectivement connectés à deux entrées d'un multiplexeur 131 dont la sortie est connectée à une première entrée d'un autre multiplieur 132, l'autre entrée de ce dernier étant reliée à la sortie du registre 125. La sortie du multiplieur 132 erst connectée à une entrée d'un multiplieur 133 dont une autre entrée est connectée à la sortie d'un générateur de fonction cosinus 134. L'entrée de ce générateur est connectée à la sortie du registre 126 qui est en outre connectée à un générateur de fonction sinus 135. La sortie du générateur 135 est connectée à une entrée du multiplieur 136 dont l'autre entrée est connectée à la sortie du multiplieur 132.

La sortie du multiplieur 133 est connectée à une entrée de l'additionneur 129 et à une entrée de l'additionneur 130 tandis que la sortie du multiplieur 136 est connectée à une entrée de chacun des deux additionneurs 137 et 138 dont les autres entrées sont respectivement connectées aux registres 127 et 128. La sortie des additionneurs 129, 130, 137 et 138 sont respectivement connectées à des circuits 139, 140, 141 et 142 de mémorisation des coordonnées considérées.

Bien entendu, le circuit 86 comporte des circuits analogues à celui qui vient d'être décrit, pour le calcul des coordonnées d'autres extrémités de segments.

Dans ce qui vient d'être décrit, les générateurs 93, 100 et 105 ainsi que le tube cathodique 72 existent sur le marché. La console graphique fabriquée par la Société CIT Alcatel, modèle VG 1610 comprend entre autres:

— un tube à rayons cathodiques circulaire, quadrichrome, à mode de balayage panoramique;
— une mémoire d'entretien en tores de ferrites permettant une fréquence de rafraichissement de l'image de 30 à 50 Hz;
— un générateur de cercle câblé correspondant au générateur 105;
— un générateur de vecteurs numérique, en mode continu, ou tireté correspondant au générateur 93;
— un générateur de caractères permettant quatre tailles de caractères affichés et pouvant constituer le générateur 100;
— un clavier alphanumérique avec touches de fonctions du type adapté à la présente application;
— une boule roulante analogue à la boule 72a de la Fig. 4.

De plus, cette console comporte un processeur graphique permettant la gestion du dialogue et la gestion de la mémoire associé au tube cathodique.

Les circuits de calcul qui ont été décrits comportent des multiplicateurs, des diviseurs, des additionneurs, des circuits trigonométriques, de type classique.

L'appareil qui vient d'être décrit en référence aux Fig. 5A, 5B et 6 fonctionne de la façon suivante.

Le système électronique 73 de pointage automatique des échos du radar qui est un appareil de type connu permet la visualisation sur l'écran du radar de bord du navire porteur, l'écho des cibles B qui entourent le navire porteur A, les codes d'identification $N_B$ correspondant à ces cibles, ainsi que les vecteurs vitesse $\vec{V_B}$ de ces cibles.

Les données délivrées périodiquement par le système de pointage automatique des échos du radar, et utilisées par l'appareil selon l'invention, sont les suivantes, (pour une cible B donnée):

— vitesse ($V_A$) du navire porteur A (en noeuds)
— vitesse ($V_B$) de la cible B (en noeuds)
— cap ($\theta_B$) de la cible B
— coordonnées cartésiennes ($X_B$) et ($Y_B$) de la cible B
— distance ($D_B$) séparant le navire porteur A de la cible B
— code d'identification ($N_B$) de la cible B
— distance de passage au plus près séparant le navire porteur A de la cible B (DCPA)
— temps au bout duquel la DCPA est atteinte (TCA).

Ces données sont stockées dans des registres de l'appareil suivant l'invention.

A l'aide du clavier alphanumérique 71 (Fig. 4), l'opérateur introduit des données destinées à être utilisées en vue de la visualisation de l'image sur l'écran.

Ces données sont les suivantes:

— échelle de l'image à obtenir (E):
— échelle temps ($\Delta T$), pour la représentation des vecteurs vitesse du navire porteur A et de ceux des cibles sélectionnées;
— vitesses du navire porteur A et de ceux des cibles sélectionnées;
— vitesse maximale $V_{MA}$ que le navire porteur A peut atteindre (en noeuds);
— coordonnées de la position du navire porteur A sur l'écran, EX, EY, en cas d'excentrement; (EX=EY=O si le navire porteur occupe le centre de l'écran);
— mode de sélection des cibles, qui peut être manuel ou automatique.

En mode manuel, l'opérateur définit sur le clavier:

— les codes $C_B$ des sibles qu'il désire visualiser (après examen de l'écran de visualisation du radar de bord sur lequel sont affichées les cibles et leur code d'identification);
— le seuil de sécurité $r_B$ que l'opérateur tient à garantir vis à vis de chaque cible choisie par lui.

Le clavier permet d'entrer de cette façon 10 cibles au moins. A cet effet, l'ensemble de registres associés au clavier comprend autant de paires de registres analogues à la paire de registres 113, 114 que de cibles à sélectionner.

En mode automatique, la sélection automatique des cibles entourant le navire porteur est assurée selon trois critères:

— la distance séparant le navire porteur A des cibles qui l'entourent doit être inférieure à une valeur $D_0$. L'opérateur tape alors sur le clavier alphanumérique 71, la valeur de $D_0$ et le seuil de sécurité r qu'il veut garantir vis à vis des cibles;

— la distance séparant le navire porteur A des cibles qui l'entourant doit être inférieure à une valeur $D_0$ et la DCPA séparant le navire porteur des cibles qui l'entourent doit être inférieure à une valeur $r_0$. L'opérateur tape sur le clavier alphanumérique 71 les valeurs de $D_0$, $r_0$ et r;

— la distance séparant le navire porteur A des cibles qui l'entourent doit être inférieure à une valeur $D_0$; la DCPA séparant le navire porteur des cibles qui l'entourent doit être inférieure à une valeur $r_0$; le TCA correspondant à la DCPA doit être inférieur à une valeur $t_0$. L'opérateur tape sur le clavier alphanumérique les valeurs de $D_0$, $r_0$, $t_0$ et r;

— les trois critères de sélection de sélection cités ci-dessus sont donnés à titre d'exemple et des critères différents peuvent être envisagés.

Les données issus du clavier alphanumérique 71 sont stockées dans des registres du clavier.

Une dernière source d'entrée est la boule 72a permettant à l'opérateur, après examen de l'image visualisée sur l'écran 72 de l'appareil, de désigner sur cet écran un point $O_1$ représentant l'extrémité du vecteur vitesse de navire porteur A, lié à la manoeuvre choisie par l'opérateur pour éviter un éventuel conflit (Fig. 7). Les coordonnées cartésiennes $O_{1X}$ et $O_{1Y}$ sont stockées dans les deux registres 95 et 96 (Fig. 5B).

Le multiplexeur 85 lié au clavier 71 active le circuit 106 et lui transmet les informations E, $\Delta T$, $V_{MA}$, EX, EY.

Le circuit 106 a pour fonction de calculer les coordonnées (X, Y) du centre du cercle dans un système cartésien lié au navire porteur A (voir Fig. 7), ainsi que le rayon $\rho$ du cercle: X, Y et $\rho$ sont stockés dans les registres 107, 108, 109.

Le circuit 106 commande ensuite le générateur de cercle 105 pour procéder à la visualisation du cercle de centre A et de rayon $V_{ma}$ sur l'écran 72.

L'appareil se met alors en attente pour recevoir les données relatives à une cible.

Les données correspondant à l'acquisition d'une cible par le système électronique 73 de pointage automatique des échos du radar sont introduites dans les registres d'entrée 74 à 82 liés au multiplexeur 83. Ce dernier transmet au circuit de sélection 84, les données $N_B$, $D_B$, DCPA, TCA relatives respectivement au code d'identification de la cible B, à la distance séparant le navire porteur A de la cible B, à la distance de passage au plus près, au temps de passage au plus près.

Le circuit de sélection 84 active le multiplexeur du clavier 85 et en reçoit les informations de mode de sélection et suivant le mode de sélection (automatique ou manuel): $D_0$, $r_0$, $t_0$ ou ($C_B$, $r_B$), retient ou non la cible de code $N_B$.

Si la cible n'est pas retenue, l'appareil se met en attente. Dans le cas contraire, le circuit 84 déclenche le circuit 86 de calcul des coordonnées.

Le circuit 86 de calcul des coordonnées des points:

— $V_A$, $V_B$, $\theta_B$, $X_B$, $D_B$, DCPA, TCA;
— active le multiplexeur 85 et en reçoit les informations E, $\Delta T$, r (ou $r_B$ selon le mode de sélection), EX, EY;
— calcule dans l'ordre les coordonnées des points A, O, B, b'', b', P, Pa, Pb, $b_1$, $b_2$, $b_3$, $b_4$ (Fig. 7);
— transmet ces coordonnées au multiplexeur 87 qui active le circuit 88 de détermination des segments à visualiser.

Le circuit 88 combine, pour chacun des segments à visualiser, les coordonnées de son origine, de son extrémité, détermine le mode de tracé (continu ou tireté) et dans le cas du mode tireté, la longueur L du tireté.

En se référant à la Fig. 7, on voit que les segments à visualiser sur l'écran 72 sont:

— la vitesse AO du navire porteur A à représenter en mode continu;
— la vitesse Bb'' de la cible B à représenter en mode continu;
— les segments b'$b_4$ et b'$b_3$ délimitant le secteur dangereux de cap et de vitesse pour la cible B, à représenter en mode continu;
— la bissectrice b'b'' du secteur dangereux à représenter en mode tireté pour compter directement la distance entre le navire porteur et la cible;
— le segment b''P indiquant la DCPA à représenter en mode tireté;
— le segment b'P représentant le produit de la vitesse relative de la cible B par le TCA à représenter en mode tireté afin de pouvoir compter directement le TCA;
— le segment PaPb montrant la position relative du navire porteur et de la cible au moment du passage au plus près.

Pour les segments en mode tireté, trois constantes I, $l_1$, $l_2$ placées dans des mémoires mortes associées au circuit 88, sont utilisées pour la détermination L de la longueur du tireté.

Pour effectuer ces opérations, le circuit 88:

— active le multiplexeur 87 et en reçoit les coordonnées correspondant aux extrémités des segments traités successivement;
— active le multiplexeur 83 et en reçoit la DCPA et le TCA (cette opération n'a lieu que lorsque sont traités les segments b'b'', b''P; b'P et PaPb) pour le calcul de la longueur L du tireté;
— effectue le calcul de L;
— active le générateur de vecteurs 93 et lui transmet les informations d'origine, d'extrémité, de mode, L pour permettre la visualisation du segment correspondant sur l'écran 72.

Ceci est répété pour chacun des segments à traiter. Quand le traitement du dernier segment est terminé, le circuit 88 déclenche le circuit 97 d'affichage alphanumérique.

Le circuit d'affichage 97:

- déclenche à nouveau le multiplexer d'entrées 83 et en reçoit les données $N_B$, $X_B$, $Y_B$ d'identification et de coordonnées de la cible B;
- détermine le code C, la taille T de chaque caractère composant le code $N_B$, ainsi que les coordonnées X, Y que doit occuper le caractère sur l'écran;
- déclenche le générateur de caractère 100 et lui transmet les informations C, T, X, Y, pour procéder à la visualisation sur l'écran.

L'appareil se met en attente et est prêt à recevoir les données relatives à une nouvelle cible.

Lorsque la boule de désignation 72a est validée (désignation par l'opérateur du point $O_1$ de coordonnées $O_{1X}$ et $O_{1Y}$), une interruption a lieu, et le circuit manoeuvre 94 est déclenché dès que possible.

Le circuit manoeuvre 94:

- active le multiplexeur de clavier 85 et reçoit les données EX, EY, $\Delta T$, E;
- active le générateur de vecteurs 93 et lui transmet les données EX, EY, $O_{1X}$, $O_{1Y}$, Mode continu, pour procéder à la visualisation du segment $AO_1$ sur l'écran;
- effectue les calculs du cap $\theta_A$ et de la vitesse $V'_A$ correspondant à la manoeuvre choisie par l'opérateur;
- active le circuit d'affichage 97 et lui transmet les données $\theta_A$ et $V'_A$.

Le circuit 97 commande l'affichage des données élaborées.

Dans ce qui précède, on a supposé que l'appareil suivant l'invention était installé à bord d'un navire en mouvement.

Cependant, il n'y a pas de modifications fondamentales à apporter lorsqu'un tel appareil est installé à terre. Chaque navire apparaissant dans la zone de surveillance est caractérisé par sa position (coordonnées cartésiennes X, Y par rapport à un repère choisi), son cap $\theta$, sa vitesse V, et son code d'identification.

Ces données sont issus du système électronique de pointage automatique des échos du radar correspondant au système é73è mais installé à terre. Il faut prévoir dans l'appareil quelques registres supplémentaires permettant de mémoriser permettant de mémoriser ces données. De tels registres ont été représentés en 120 à la Fig. 5A.

Dans une station à terre, l'opérateur, présentant des difficultés entre un groupe de navires peut, comme décrit précédemment, sélectionner ces navires sur le clavier alphanumérique 71 (Fig. 4), afin de de visualiser le plage de manoeuvre de chacun des ces navires et les informer ensuite de la situation dans laquelle ils se trouvent ainsi que des mesures qu'ils peuvent prendre afin de supprimer tout risque de collision.

Par ailleurs, les fonctions remplies par le circuit des Fig. 5A et 5B peuvent également être assurées par un ordinateur associé à une console d'affichage et convenablement programmé.

**Revendications**

1. Appareil de détection et de prévention de risques de collision entre un premmier navire (A) et au moins un second navire et/ou obstacle (B), qui, à partir d'informations de cap et de vitesse relevées par le système électronique (73) de pointage automatique des échos radar équipant le premier navire (A) permet d'afficher un secteur dangereux ($M_{AB}$) représentatif des valeurs dangereuses de cap et de vitesse pour ledit premier navire (A) par rapport à l'autre navire et/ou obstacle pouvant se présenter, ce secteur dangereux étant destiné à être visualisé sur des moyens de visualisation au moyen de deux segments de droite ($b_1-b_3$; $b_2-b_4$) se coupant en un point commun (b') et obtenues par les intersections respectives ($b_1$, $b_3$; $b_4$) de deux demi-droites (b'$-b_3$; b'$-b_4$) issues dudit point commun (b') et dénommées respectivement »demi-droite« de passage sur l'avant (b'$-b_3$) et »demi-droite de passage sur l'arrière« (b'$-b_4$) avec un cercle centré sur la position du premier navire (A) et dont le rayon est égal au vecteur vitesse maximale ($V_{ma}$) de ce premier navire, ces deux demi-droites (b'$-b_3$; b'$-b_4$) étant déterminés à partir d'une demi-droite (b'$-$b") issue dudit point commun (b') et dite »demi-droite de collision« résultant de la translation sur une distance égale au vecteur vitesse actuelle ($\overrightarrow{V_b}$) du second navire et/ou obstacle (B), de la distance actuelle (A$-$B) séparant les positions du premier navire (A) et du second navire et/ou obstacle (B) à l'instant considéré, »demi-droite (b'$-b_3$) de passage sur l'avant« faisant avec ladite »demi-droite de collision« (b'$-$b") un angle dont le sinus est égal au quotient de la distance de sécurité »de passage sur l'avant« choisie (r) et de ladite distance actuelle (A$-$B), la »demi-droite (b'$-b_4$) de passage sur l'arrière« faisant un angle avec la »demi-droite de collision« (b'$-$b") dont le sinus est égal au quotient de la distance de sécurité »de passage sur l'arrière« choisie (r') et de ladite distance actuelle (A$-$B), la »demi-droite de collision« (b'$-$b") étant située entre les »demi-droites (b'$-b_3$; b'$-b_4$) de passage sur l'avant et sur l'arrière«, cet appareil étant caractérisé en ce qu'il comprend un clavier alphanumérique (71) destiné d'une part à sélectionner parmi lesdits autres navires et/ou obstacles lequel doit être pris en compte pour l'établissement dudit secteur dangereux représentatif ($M_{AB}$) et d'autre part, à introduire les vitesses et les coordonnées de la position dudit premier navire (A), des moyens électroniques de traitement (74 à 118) pour synthétiser à partir des informations provenant dudit système électronique de pointage automatique des échos radar (73) et dudit clavier (71) des ensembles de données définissant le secteur dangereux ou les secteurs dangereux associé(s) à un ou plusieurs navires et/ou obstacles sélectionnés et le vecteur vitesse avtuelle ($\vec{V_A}$) par rapport à ce ou à ces secteur(s) dangereux, lesdits moyens électroniques de traitement des données comprenant un premier multiplexeur (83) dont les entrées sont connectées audit système électronique de pointage automatique des échos radar (73) par l'intermédiaire de registres (74 à 82) de stockage des informations fournies par ledit système électronique de pointage automatique des échos radar (73), un second multiplexeur (85) associé au clavier alphanumérique (71) par l'intermédiaire de registres (107a à 118) de stockage des données introduites par ledit clavier, un circuit (84) de sélection de cibles connecté aux premier et second multiplexeurs (83, 85) et commandant un ensemble (86) de circuits de calcul des coordonnées des points se rapportant à la cible sélectionnée, ledit ensemble de circuit de calcul (86) étant en outre connecté directement à un troisième multiplexeur (87) destiné à multiplexer les coordonnées desdits points se rapportant à ladite cible sélectionnée; lesdits moyens électroniques de traitement des données comprenant enfin un ensemble de circuits (88) de détermination des segments à visualiser, connecté au troisième multiplexeur (87) et au premier multiplexeur (83) et commandant un générateur de vecteurs (93) dont la sortie est connectée à un tube cathodique (72) desdits moyens de visualisation.

2. Appareil suivant la revendication 1, caractérisé en ce qu'il comporte en outre un dispositif à boule (72a) de désignation de cible connecté à un circuit de manoeuvre (94) qui est connecté à son tour, d'une part audit générateur de vecteurs (93) et, d'autre part, à un circuit d'affichage alphanumérique (97) destiné à commander un générateur (100) de caractères à afficher sur le tube cathodique (72), ledit circuit d'affichage alphanumérique étant en outre connecté audit premier multiplexeur (83).

3. Appareil suivant la evendication 2, caractérisé en ce qu'il comporte en outre un circuit (106) connecté au second multiplexeur (85) et destiné à commander un générateur de cercles (105) pour provoquer l'affichage sur ledit tube cathodique des cercles de vitesse du premier navire.

**Patentansprüche**

1. Vorrichtung zur Feststellung und Verhinderung einer Kollisionsgefahr zwischen einem ersten Wasserfahrzeug (A) und wenigstens einem zweiten Wasserfahrzeug und/oder Hindernis (B), welche anhand von Kurs- und Geschwindigkeitsinformation, die von einem automatischen elektronischen Radarechozeichengabesystem (73), mit dem das erste Wasserfahrzeug (A) ausgestattet ist, aufgenommen werden, die Anzeige eines gefährlichen Sektors ($M_{AB}$) gestattet, welcher die gefährlichen Kurs- und Geschwindigkeitswerte für das erste Wasserfahrzeug (A) bezüglich des anderen Wasserfahrzeugs und/oder Hindernisse, die vorkommen können, darstellt, wobei der gefährliche Sektor für eine Darstellung auf einer Anzeigeeinrichtung mittels zweier Geradenabschnitte ($b_1 - b_3$; $b_2 - b_4$) bestimmt ist, welche sich in einem gemeinsamen Punkt (b') schneiden und durch die jeweiligen Schnittpunkte ($b_1$, $b_3$; $b_2$, $b_4$) von zwei vom gemeinsamen Punkt (b') ausgehenden und »Vornevorbeigangshalbgerade« ($b' - b_3$) bzw. »Hintenvorbeigangshalbgerade« ($b' - b_4$) genannten Halbgeraden ($b' - b_3$; $b' - b_4$) mit einem um die Position des ersten Wasserfahrzeugs (A) geschlagenen Kreis, dessen Radius gleich dem maximalen Geschwindigkeitsvektor ($V_{ma}$) dieses ersten Wasserfahrzeugs ist, gewonnen sind, wobei die beiden Halbgeraden ($b' - b_3$; $b' - b_4$) anhand einer vom gemeinsamen Punkt (b') ausgehenden und »Kollisionshalbgerade« genannten Halbgeraden ($b' - b''$) bestimmt sind, die aus der Translation des die Positionen des ersten Wasserfahrzeugs (A) und des zweiten Wasserfahrzeugs und/oder Hindernisse (B) im betrachteten Zeitpunkt trennenden tatsächlichen Abstandes (A−B) über einen dem tatsächlichen Geschwindigkeitsvektor ($V_b$) des zweiten Wasserfahrzeugs und/oder Hindernisses (B) gleichen Abstand ergibt, wobei die »Vornevorbeigangshalbgerade« ($b' - b_3$) mit der »Kollisionshalbgeraden« ($b' - b''$) einen Winkel einschließt, dessen Sinus gleich dem Quotienten aus dem gewählten Sicherheitsabstand (r) für den »Vornevorbeigang« und dem tatsächlichen Abstand (A−B) ist, wobei die »Hintervorbeigangshalbgerade« ($b' - b_4$) mit der »Kollisionshalbgeraden« ($b' - b''$) einen Winkel einschließt, dessen Sinus gleich dem Quotienten aus dem gewählten Sicherheitsabstand (r') für den »Hintenvorbeigang« und dem tatsächlichen Abstand (A−B) ist, wobei die »Kollisionshalbgerade« ($b' - b''$) zwischen der »Vornevorbeigangshalbgeraden« ($b' - b_3$) und der »Hintenvorbeigangshalbgeraden« ($b' - b_4$) liegt, dadurch gekennzeichnet, daß sie eine alphanumerische Tastatur (71) einerseits zur Auswahl unter den anderen Wasserfahrzeugen und/oder Hindernissen desjenigen, das für die Erstellung des gefährlichen Sektors ($M_{AB}$) berücksichtigt werden soll, und andererseits zur Eingabe der Geschwindigkeiten und Positionskoordinaten des ersten Wasserfahrzeugs (A), elektronische Verarbeitungsmittel (74 bis 118), die anhand der von dem automatischen elektronischen Radarechozeichengabesystem (73) und der Tastatur (71) kommenden Information Größengesamtheiten aufbauen, welche den oder die zu einem oder mehreren ausgewählten Wasserfahrzeugen und/oder Hindernissen gehörigen gefährlichen Sektoren und den tatsächlichen Geschwindigkeitsvektor ($V_A$) bezüglich des oder der gefährlichen Sektoren bestimmen, umfaßt, wobei die elektronischen Verarbeitungsmittel für die Größen einen ersten Multiplexer (83), dessen Eingänge mit dem automatischen elektronischen Radarechozeichengabesystem (73) über Register (74 bis 82) zur Speicherung von von dem automatischen elektronischen Radarechozeichengabesystem (73) gelieferter Information verbunden sind, einen der alphanumerischen Tastatur (71) über Register (107a bis 118) zur Speicherung von über die Tastatur eingegebenen Größen zugeordneten zweiten Multiplexer (85), eine mit dem ersten und dem zweiten Multiplexer (83, 85) verbundene Schaltung (84) zur Auswahl von Zielobjekten, welche eine Gesamtheit (86) von Rechenschaltungen zur Berechnung der Koordinaten der sich auf das ausgewählte Zielobjekt beziehende Punkte steuert, wobei die Gesamtheit von Rechenschaltungen (86) ferner direkt mit einem dritten Multiplexer (87) zum Multiplexen der Koordinaten der sich auf das ausgewählte Zielobjekt beziehende Punkte verbunden ist, aufweist, wobei die elektronischen Mittel zur Verarbeitung der Größen schließlich eine Gesamtheit von Schaltungen (88) zur Bestimmung der anzuzeigenden Segmente aufweisen, die mit dem dritten Multiplexer (87) und dem ersten Multiplexer (83) verbunden ist und einen Vektorgenerator (93) steuert, dessen Ausgang mit einer Kathodenstrahlröhre (72) der Anzeigemittel verbunden ist.

2. Vorrichtung nach Anspruch 1, dadurch gekennzeichnet, daß sie ferner eine Kugelvorrichtung (72a) zur Bezeichnung des Zielobjekts aufweist, welche mit einer Betätigungsschaltung (94) verbunden ist, welche ihrerseits einerseits mit dem Vektorgenerator (93) und andererseits mit einer Schaltung für eine alphanumerische Anzeige (97) verbunden ist, die zur Steuerung eines Generators (100) für auf der Kathodenstrahlröhre (72) anzuzeigenden Zeichen bestimmt ist, wobei die Schaltung für eine alphanumerische Anzeige ferner mit dem ersten Multiplexer (83) verbunden ist.

3. Vorrichtung nach Anspruch 2, dadurch gekennzeichnet, daß sie ferner eine mit dem zweiten Multiplexer (85) verbundene Schaltung (106) zur Steuerung eines Kreisgenerators (105) zur Erzeugung einer Anzeige von Geschwindigkeitskreisen des ersten Wasserfahrzeugs auf der Kathodenstrahlröhre aufweist.

**Claims**

1. Apparatus for detection and warning of risks of collision between a first ship (A) and at least a second ship and/or an obstacle, (B) which, from heading and speed informations obtained by the electronic system (73) for automatically plotting radar echoes provided on the first ship (A) allows to display a dangerous sector ($M_{AB}$) representative of the dangerous values of heading and speed for said first ship (A) relative to the other ship and/or obstacle which may appear, said dangerous sector being intended to be displayed on display means by means of straigh line segments ($b_1$—$b_3$; $b_2$—$b_4$) intersecting at a common point (b') and obtained through the respective intersections ($b_1$, $b_3$; $b_2$, $b_4$) of two half-lines (b', $b'_3$; b', $b'_4$) originating from said common point (b') and named »half line of passage ahead« (b', $b_3$) and »half-line of passage astern« (b', $b_4$) with a circle centered on the location of the first ship (A) and the radius of which is equal to the maximal speed vector (Vma) of said first ship, said two half-lines (b', $b_3$; b', $b_4$) being determined from a half-line (b'—b'') originating from said commun point (b') and named »half-line of collision« resulting from the translation through a distance equal to the present speed vector ($\overline{Vb}$) of the second ship and/or obstacle (B), of the present distance (A—B) separating the locations of the first ship (A) and of the second ship and/or obstacle (B) at the considered time, the »half-line (b'—$b_3$) of passage ahead« making with said »half-line of collision« (b'—b'') an angle the sine of which is equal to the quotient of the selected safety distance of »passage ahead« (r) and of said present distance (A—B), the half-line (b'—$b_4$) of passage astern« making with the »half-line of collision« (b'—b'') an angle the sine of which is equal to the quotient of the selected safety distance »of passage astern« (r') and of said present distance (A—B), the »half-line of collision« (b'—b'') being located between the »half-lines (b'—$b_3$; b'—$b_4$) of passage ahead and astern«, said apparatus being characterized in that it comprises an alphanumeric keybord (71) for on one hand selecting among said other ships and/or obstacles which on them must be taken into account for generating said dangerous representative sector ($M_{AB}$) and on the other hand for introducting the speeds and the coordinates of the location of said first ship (A), electronic processing means (74—118) for synthetizing from the informations provided by said electronic system for automatic plotting of the radar echoes (73) and by said keybord (71) data sets defining the dangerous sector or the dangerous sectors attached to one or several selected ships and/or obstacles and the present speed vector ($\overline{VA}$) relative to this or these dangerous sector(s), said electronic data processing means comprising a first multiplexer (83) the inputs of which are connected to said electronic system for automatically plotting the radar echoes (73) by means of registers (74—82) for storing the informations delivered by said electronic system for automatically plotting the radar echoes (73), a second multiplexer (85) associated to the alphanumeric keybord (71) through registers (107a—118) for storing the data introduced by said keybord, a target selecting circuit (84) connected to the first and second multiplexers (83, 85) and controlling a set of circuits (86) for calculating the coordinates of the points related to the selected target, said set of calculation circuits (86) being further connected directly to a third multiplexer (87) for multiplexing the coordinates of said points related to said selected target, said electronic data processing means comprising at last a set of circuits (88) for determining segments to be displayed, connected to the third multiplexer (87) and to the first multiplexer (83) and controlling a vector generator (93) the output of which is connected to a cathode ray tube (72) of said display means.

2. Apparatus as claimed in claim 1, characterized in that it further comprises a target determining ball device (72a) connected to a set of maneuver circuits (94) which is itself connected on one hand to said vector generator (93) and on the other hand to an alphanumeric display device (97) provided for controlling a generator (100) of characters to be displayed on the cathode ray tube (72), said alphanumeric display device being further connected to said first multiplexer (83).

3. Apparatus as claimed in claim 2, characterized in that it further comprises a circuit (106) connected to the second multiplexer (85) and provided for controlling a generator of circles (105) in order to control the display on said cathode ray tube of the speed circles of the first ship.

FIG.1

FIG.2

0 020 269

FIG.3

# FIG. 4

# FIG. 6

# FIG. 7

-72-

**FIG.5 A**

| -73- |
|---|

| 120 | | $V_A$ | $V_B$ | $\theta_B$ | $X_B$ | $Y_B$ | $D_B$ | $N_B$ | DCPA | TCA |
|---|---|---|---|---|---|---|---|---|---|---|
| | | 74 | 75 | 76 | 77 | 78 | 79 | 80 | 81 | 82 |

| -83- |
|---|

$D_B$
$N_B$
DCPA
TCA

TCA
DCPA

$D_B$
$Y_B$
$X_B$
$\theta_B$
$V_B$
$V_A$

$Y_B$
$X_B$
$N_B$

TCA
DCPA

| -84- |
|---|

| -86- |
|---|
| $A_X$ | $A_Y$ | $O_X$ | $O_Y$ | $B_X$ | $B_Y$ | $b'_x$ | $b''_y$ | $b_x$ | $b_y$ | $P_X$ | $P_Y$ | Pax | Pay | Pbx | Pby | b1x | b1y | b2x | b2y | b3x | b3y | b4x | b4y |

| -87- |
|---|

# FIG.5B

$E_x$, $E_y$, $\Delta T$, $E$

$C_B$, $Z_B$ ou $D_o$, $r_o$ ou $D_o$, $r_o$, $t_o$

$E$, $\Delta T$, $E_x$, $E_y$, $Z_B$ ou $T$

0 020 269